# EUROPEAN PATENT APPLICATION

(11) **EP 1 209 357 A1**
(43) Date of publication of application: **29.05.2002**
(21) Application number: 00956789.2
(22) Date of filing: 30.08.2000
(51) Int. Cl.: F04B 39/00, F25B 1/00, C09K 5/04

(54) **CLOSED MOTOR-DRIVEN COMPRESSOR**

(30) Priority: 31.08.1999 JP 24500399
(71) Applicant: Sanyo Electric Co., Ltd., Moriguchi-shi, Osaka-fu 570-8677 (JP)
(72) Inventor: EBARA, Toshiyuki Sanyo Electric Co., Ltd, Osaka 570-8677 (JP); TADANO, Masaya Sanyo Electric Co., Ltd, Osaka 570-8677 (JP); YAMAKAWA, Takashi Sanyo Electric Co., Ltd, Osaka 570-8677 (JP); ODA, Atsushi Sanyo Electric Co., Ltd, Osaka 570-8677 (JP)
(74) Representative: Woodward, John Calvin
(86) International application number: JP0005857
(87) International publication number: WO0116485

(57) **Abstract**

A closed type electric compressor (10) arranges and receives a motor element (14) and a rotary compression element (18) driven by a rotary shaft (16) connected to the motor element (14) within a closed container storing a lubricating oil in a bottom portion thereof with having a CO₂ as a refrigerant, and supplies the lubricating oil to a bearing portion and respective sliding portions of upper and lower eccentric portions (38, 40) and upper and lower rollers (42, 44) provided in the rotary shaft (16) via an oil hole (60), oil supply holes (62, 64) and spiral oil supply grooves (66, 68) formed in the rotary shaft (16). A polyalkylene glycol group oil (PAG oil) (82) having a low anti CO₂ solubility and a high viscosity is used as the lubricating oil. The PAG oil has the low anti CO₂ solubility and can restrict a reduction of efficiency due to a reduction of an oil viscosity and an oil outflow into a pipe, so that it is possible to prevent an input from being increased.

## Description

### BACKGROUND OF THE INVENTION

### Field of the Inventon

The present invention relates to a closed type electric compressor, and more particularly to a closed type electric compressor using an optimum lubricating oil in the case of employing CO₂ as a refrigerant. The present invention relates to a refrigerant recovery apparatus, a refrigerant recovery method, a refrigeration apparatus provided with the refrigerant recovery apparatus, a method of controlling a refrigerant in a refrigerant circuit or a reproducing apparatus and a reproducing method of the refrigerant recovery apparatus.

### Description of the Related Art

For example, a rotary compressor disclosed in Japanese Patent No. 2517346 "F04B49/02" includes a cylindrical closed container having an oil storage in a bottom portion, a motor element received within the closed container and two rotary compression elements positioned below the motor element and driven by the motor element. The rotary compression element is constituted by a cylinder, a rotary shaft connected to the motor element so as to be driven, a roller rotated along an inner wall of the cylinder by an eccentric portion integrally formed with the rotary shaft, a vane having a front end portion brought into contact with the roller and sliding in an oscillating manner within a groove provided in the cylinder, and a bearing member closing an opening surface of the cylinder, and is separated between the respective compression elements by an intermediate partition plate. Further, an oil supply passage (including a hole and a groove) for supplying a lubricating oil stored in the bottom portion of the closed container to the bearing portion and the respective sliding portions is provided in the rotary shaft.

Here, in the case of using a carbon dioxide (CO₂) corresponding to a natural refrigerant as the refrigerant taking a global environment, a combustibility, a toxicity or the like into consideration, a pressure of the refrigerant reaches about 100 kg/cm²G in a high pressure side and becomes about 30 kg/cm²G in a low pressure side.

Accordingly, in an ether group oil or an ester group oil which has been conventionally used as the lubricating oil, an oil viscosity is reduced due to a high anti CO₂ solubility, whereby a sealing property in the high pressure side is deteriorated, so that there are problems that not only a compression efficiency is reduced but also an input increase is caused due to an oil outflow to a refrigerant pipe.

Accordingly, a main object of the present invention is to provide a closed type electric compressor in which an optimum lubricating oil is used for a CO₂ refrigerant, thereby improving a compression efficiency and a performance.

### SUMMARY OF THE INVENTION

That is, in order to solve the problems mentioned above, in accordance with the present invention, there is provided a closed type electric compressor comprising:
a closed container storing a lubricating oil in a bottom portion thereof; and
an electric compression main body having a CO₂ as a refrigerant and arranged and received within the closed container,
wherein a polyalkylene glycol group oil is used as the lubricating oil.

Since the oil having a high viscosity is used as the lubricating oil combined with the CO₂ refrigerant, it is possible to make the anti CO₂ solubility low, it is possible to secure a sealing property in the high pressure side, it is possible to prevent an efficiency from being reduced, and it is possible to restrict an outflow of the oil to the pipe.

In accordance with the present invention, it is possible to provide the closed type electric compression having a good compression efficiency even in the case of using the CO₂ refrigerant.

The object mentioned above, the other objects, features and advantages of the present invention will be apparent on the basis of a detailed description of the following embodiment given with reference to the accompanying drawings.

### BRIEF DESCRIPTION OF THE DRAWINGS

Fig. 1 is a vertical cross sectional view of a main portion of a 2-cylinder type rotary compressor corresponding to one embodiment in accordance with the present invention; and
Fig. 2 is a cross sectional view of a main portion of a rotary compression element in Fig. 1.

### DETAILED DESCRIPTION OF THE PREFERRED EMBODIMENT

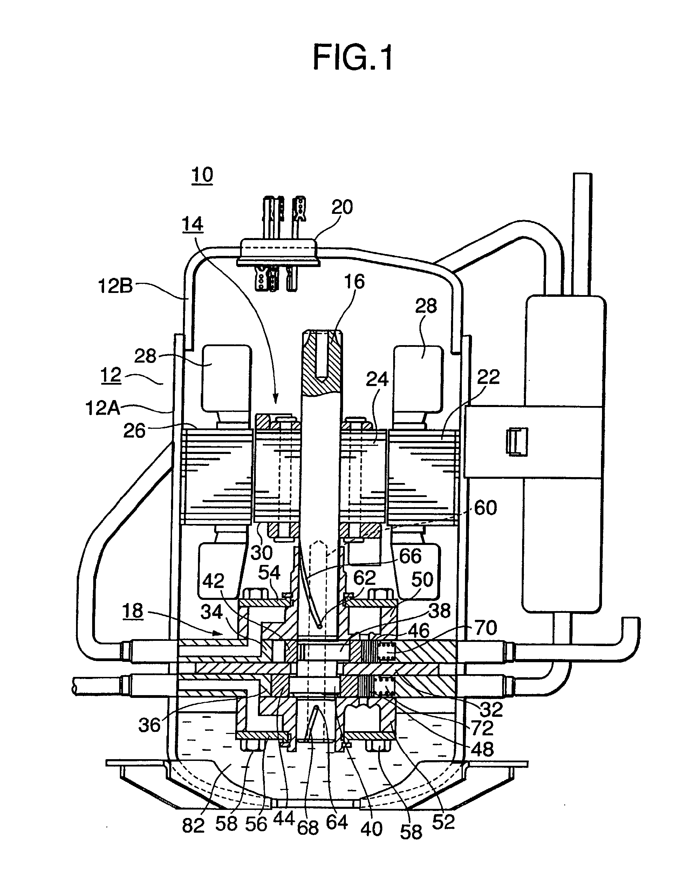

A 2-cylinder type rotary compressor 10 corresponding to one embodiment in accordance with the present invention shown in Fig. 1 includes a cylindrical closed container 12 made of a steel plate, a motor element 14 arranged in an upper space of the container 12, and a rotary compression element 18 positioned in a lower space of the motor element 14 and driven by a rotary shaft 16 connected to the motor element 14.

The cylindrical closed container 12 forms an oil storage in a bottom portion, and is constituted by a container main body 12A receiving the motor element 14 and the rotary compression element 18, and a lid body 12B closing an upper opening of the container main body 12A, and a terminal portion 20 (a wiring is omitted) for supplying an external electric power to the motor element 14 is mounted to the lid body 12B.

The motor element 14 is constituted by a stator 22 annularly mounted along an inner peripheral surface of the upper space in the closed container 12, and a rotor 24 arranged so as to provide a slight gap in an inner side of the stator. A rotary shaft 16 extending in a vertical direction through a center thereof is provided in the rotor 24. The stator 22 has a laminated body 26 obtained by laminating ring-like electromagnetic steel plates, and a plurality of coils 28 wound around the laminated body 26. Further, the rotor 24 is also formed by a laminated body 30 made of an electromagnetic steel plate in the same manner as that of the stator 22 so as to form an AC motor. Further, it may be constituted by a DC motor to which a permanent magnet is inserted.

Further, the rotary compression element 18 is constituted by an intermediate partition plate 32, upper and lower cylinders 34 and 36 arranged on both of upper and lower surfaces of the intermediate partition plate 32, upper and lower rollers 42 and 44 connected to upper and lower eccentric portions 38 and 40 integrally formed with the rotary shaft 16 so as to rotate within the upper and lower cylinders 34 and 36, upper and lower vanes 46 and 48 brought into contact with the upper and lower rollers 42 and 44 so as to respectively section inner portions of the upper and lower cylinders 34 and 36 into low pressure chambers 34a and 36a and high pressure chambers 34b and 36b, and an upper supporting member 50 and a lower supporting member 52 closing the upper and lower openings of the upper and lower cylinders 34 and 36 and commonly serving as a bearing of the rotary shaft 16.

Further, the upper supporting member 50, the upper cylinder 34, the intermediate partition plate 32, the lower cylinder 36 and the lower supporting member 52 which constitute the rotary compression element 18 mentioned above are arranged in this order, and are integrally connected together with an upper plate 54 and a lower plate 56 by using a plurality of mounting bolts 58.

An oil hole 60 for supplying the lubricating oil, that is, the oil stored in the bottom portion of the closed container 12 to the respective sliding portions of the rotary compression element 18 is provided in a center of the rotary shaft 16, and spiral oil supply grooves 66 and 68 communicated with the oil hole 60 via oil supply holes 62 and 64 provided in the middle thereof so as to supply the oil to the inner sides of the upper and lower rollers 42 and 44 are formed on an outer peripheral surface of the rotary shaft 16. Further, springs 70 and 72 for always energizing with respect to the upper and lower rollers 42 and 44 are provided in the upper and lower vanes 46 and 48.

In this case, it is optimum that the oil having a low anti CO₂ solubility in which a pressure under a high pressure is high is used as the lubricating oil in the case of using the CO₂ refrigerant taking the global environment, the combustibility, the toxicity and the like into consideration. That is, as the oil, the polyalkylene glycol or a derivative thereof is desirable. This oil is called as a PAG oil. A viscosity of the PAG oil is between 100 and 200 cSt, the anti CO₂ refrigerant solubility is extremely low, and an inferior lubrication with respect to the respective sliding portions due to the reduction of viscosity and an oil outflow into the pipe are restricted.

The viscosity is a value at a room temperature (40 °C), however, in the oil during an actual operation of the compressor, the viscosity thereof is reduced due to an increase of temperature. However, in this embodiment, it is possible to sufficiently lubricate by forming an oil film by the bearing portion or the like.

Next, a description will be given of a summary of an operation in this embodiment.

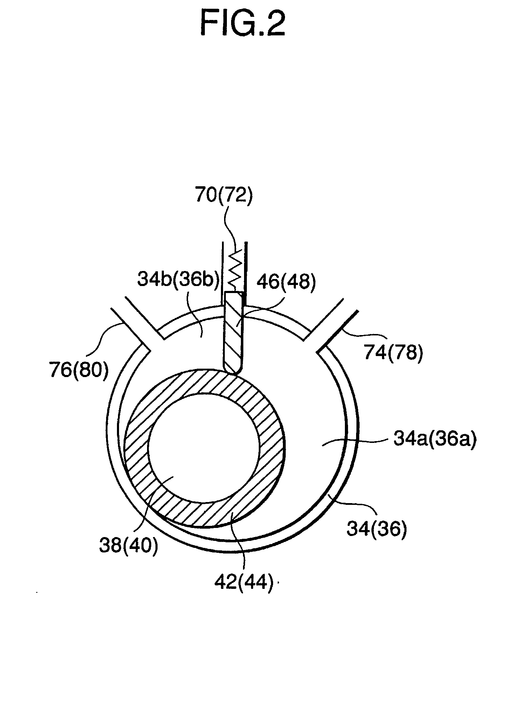

At first, when applying an electric current to the motor element 14 via the terminal portion 20 and a wiring (not shown), the motor element 14 starts and the rotary shaft 16 fixed to the rotor 24 rotates. Then, the upper and lower rollers 42 and 44 connected to the upper and lower eccentric portions 38 and 40 integrally formed with the rotary shaft 16 eccentrically rotate within the upper and lower cylinders 34 and 36. Accordingly, as shown in Fig. 2, the refrigerant gas sucked into the low pressure chamber 34a of the upper cylinder 34 from a suction port 74 is compressed in accordance with an operation of the upper roller 42 and the upper vane 46 so as to be fed out to a discharge port 76 from the high pressure chamber 34b of the upper cylinder 34. In this case, the same compressing operation will be executed in the lower cylinder 36 with a phase difference of 180 degrees. That is, in this case, the refrigerant gas having an intermediate pressure and compressed in a first stage by the upper cylinder 34 is sucked into the low pressure chamber 36a from a suction port 78 of the lower cylinder 36, and a compression in a second stage is executed in the high pressure chamber 36b of the lower cylinder 36 in accordance with the operation of the lower roller 44 and the lower vane 48. Further, the refrigerant gas having a high pressure and a high pressure is fed out to an external refrigerant circuit (not shown) constituting a refrigerant cycle (not shown) via a discharge port 80 from the high pressure chamber 36b. The refrigerant cycle is continuously executed by repeating the operation thereafter.

In this case, the PAG oil 82 stored in the bottom portion of the closed container 12 moves upward in the oil hole 60 in a vertical direction provided in an axial center of the rotary shaft 16 in accordance with a rotation of the rotary shaft 16, and flows out to the spiral oil supply grooves 66 and 68 from the oil supply holes 62 and 64 in the middle so as to be supplied to the bearing of the rotary shaft 16 and the respective sliding portions of the upper and lower eccentric portions 38 and 40. As a result, the rotary shaft 16 and the upper and lower eccentric portions 38 and 40 can smoothly rotate with a reduced abrasion.

In accordance with the present invention, since the oil having the high viscosity is used as the lubricating oil combined with the CO₂ refrigerant, it is possible to make the anti CO₂ solubility low, it is possible to secure the sealing property in the high pressure side, it is possible to prevent the efficiency from being reduced, and it is possible to restrict the outflow of the oil to the pipe.

Further, it is possible to provide the closed type electric compression having a good compression efficiency even in the case of using the CO₂ refrigerant.

## Claims

1. A closed type electric compressor comprising:
a closed container storing a lubricating oil in a bottom portion thereof; and
an electric compression main body having a CO₂ as a refrigerant and arranged and received within the closed container,
wherein a polyalkylene glycol group oil is used as said lubricating oil.

2. A closed type electric compressor as claimed in claim 1, wherein a viscosity of said oil is within a range between 100 and 200 cSt at a room temperature.

3. A closed type electric compressor as claimed in claim 1 or 2, wherein said electric compressor main body includes a motor element and a rotary compression element driven by a rotary shaft connected to said motor element.

4. A closed type electric compressor as claimed in claim 3, wherein said rotary compression element includes two cylinders.
